# EUROPEAN PATENT APPLICATION

(11) **EP 3 450 408 A1**
(43) Date of publication of application: **06.03.2019**
(21) Application number: 18191771.7
(22) Date of filing: 30.08.2018
(51) Int. Cl.: C03B 11/08, B44C 5/04, C03B 11/10, E04C 1/42

(54) **GLASS TILE AND METHOD OF MAKING THE SAME**

(30) Priority: 01.09.2017 US 201762553294 P
(71) Applicant: LIBBEY GLASS Inc., Toledo, Ohio 43604 (US)
(72) Inventor: Hartman, Terry, Toledo, OH Ohio 43604 (US)
(74) Representative: BRP Renaud & Partner mbB Rechtsanwälte Patentanwälte Steuerberater

(57) **Abstract**

The present disclosure relates to a glass tile (10) and a method of making a glass tile (10) using a glass pressing technique. The glass tile (10) may include a tile body (12) of substantially homogenous glass material, an annular rim (24) extending in a marginal portion (26) of the tile body (12), and a cavity (30) provided in a central portion (28) of the tile body (12) such that the glass tile (10) forms a multi-sided compartment. A predefined texture (14) may be disposed on at least part of the glass tile (10) to provide a desired visual effect and/or a desired optical effect. The glass tile (10) may be incorporated into a decorative assembly or structure such as flooring, roofing, doors and windows, landscaping and facades, and lighting.

## Description

### CROSS-REFERENCE TO RELATED APPLICATIONS

This application claims priority to U.S. Provisional Patent Application No. 62/553,294, filed September 1, 2017, the contents of which are hereby incorporated in its entirety.

### TECHNICAL FIELD

The present disclosure relates generally to a glass tile and a method of making a glass tile, and more particularly to a hollow, textured glass tile formed by a glass pressing technique.

### BACKGROUND

Glassmaking requires unique forming techniques because the glass material must be worked while it is in a red-hot liquid phase. The selection of an appropriate forming process depends on the application and desired properties of the glass product. Generally, a mixture of raw materials including sand (silica), lime, sodium potassium carbonate and other additives e.g., calcium oxide and/or manganese oxide, is heated in a furnace at temperatures of around 1,500° C and a homogeneous mixture of molten glass is formed. The molten glass is then carried in a forehearth while still red-hot to a forming machine and shaped at temperatures where the viscosity can be controlled, and cooled in a controlled manner to ambient temperature, during which time the viscosity of the glass increases by several orders of magnitude. The way glass is cooled has a decisive influence on its strength, structural integrity, and visual appearance. If the glass is cooled unequally, which may occur in products of non-uniform thickness, internal stresses may propagate and form optical distortions as well as defects that tend to decrease the structural performance of the glass article. The strength and hardness of glass, combined with transparency and chemical resistance, contributes to the broad application of glass products.

In recent years, the interior and exterior design of commercial and residential buildings and structures, including furnishings therefor, equipment, electrical and electronic devices, and the like have employed increasing quantities of glass with unique visual effects. For example, glass with decorative patterns or ornamentation has gained popularity for use in various types of doors, flooring, roofing, lighting, landscaping and facades, furniture and other architectural applications due to its properties of transparency, electrical insulation, strength and resistance to chemical attack, to name a few. Further, glass articles that have a textured surface have gained popularity where it is desired that select wavelengths of light should pass through the glass article, but without being transparent. This is particularly true for lens or cover applications for lights, such as light-emitting diode (LED) and organic light-emitting diode (OLED) lighting devices, where textured glass may help optimize light transmission or extraction at desired visible wavelengths. In a similar manner, textured glass could be used to increase the efficiency and optical properties of photovoltaic devices.

Glass as a component incorporated into structural applications or devices has many advantages over conventional counterpart materials, such as plastic, with respect to hardness, refractive index, light permeability, and stability to environmental changes in terms of temperature and humidity. However, glass is a relatively brittle material without elastic or elasto-plastic behavior to help decrease the influence of local stresses. Thus, the glass article must be made sufficiently durable and strong to withstand a variety of environmental conditions to meet safety requirements, e.g., Class 4 ATSM FM 4473 rating (hail impact test) and Class F ATSM D3161 rating (wind-resistance test).

Current trends in the development of glass as a structure component, e.g., in flooring, roofing, windows, lens or covers for lights, etc., involve tempered glass and hybrid products, such as laminates, due to requirements of safety and heat insulating properties. Tempered glass is used when strength, thermal resistance and safety are important considerations. Tempering is a process that involves uniform reheating and rapid cooling to induce tension in the glass, and requires a minimum glass thickness of about 2.8 mm - 3 mm. During the tempering process, the glass is heated above the annealing temperature to a tempering temperature, e.g., to around 620° C, and cooled rapidly to lock the outer surfaces into compression and the central core into tension. Conventional tempered glass has five compression layers to meet the FM approvals of Class 4 impact rating. However, such five-layered tempered glass cannot be subsequently cut because this would initiate a failure, and may form optical distortions that have a negative influence on desired light transmission or extraction at desired wavelengths. Due to the viscoelasticity properties of glass at elevated temperatures, e.g., above the annealing temperature of around 450-482° C, and the influence of irregular thermal distribution, tempering has been conventionally limited to sheet glass.

An approach widely used in the glass industry to produce sheet glass involves a float glass process due to the high quality or pristine surfaces characteristic of the process. In this process, molten glass is poured continuously from a furnace onto a bath of molten tin, where the molten glass floats on the tin bath, spreads out and forms a sheet of uniform thickness with smooth, near-perfect parallel surfaces. After removal from the tin bath, the glass sheet is cooled (e.g., annealed) and then cut into individual sections. The float process forms flat, high surface quality glass sheets of uniform thickness. However, textures or patterns cannot be formed in float glass without secondary and/or finish machining, such as cutting, which leaves noticeable imperfections, such as the appearance of glossy edges, and may lead to defects such as surface flaws, notches and cracks that can cause fracture and breaking. Further, since the glass floats on the tin bath, some diffusion of tin atoms into the glass surface occurs that may reduce properties such as strength on this side due to surface flaws and defects.

Another approach involves a rolling process, where a continuous ribbon of molten glass is fed between two rollers, one or both of which may imprint a pattern on the surface(s) of the glass, to form a substantially flat sheet. The textured appearance, however, is limited by the lack of surface detail and the shape of the glass sheet is restructured in design.

Laminates are multi-layered arrangements of glass sheets bonded together with thin polymer interlayers to improve safety and strength. The polymer interlayers add strength and hold glass pieces together should one of the glass sheets break. However, laminates suffer from disadvantages associated with leakage, delamination, and an artificial appearance. Other forms of multi-layered arrangements may include multiple glass pieces such as flat glass joined together by a fusing process to form complex shapes. However, such structures where multiple glass pieces are fused together may form optical distortions and/or influence visibility to the naked eye, and further lead to production inefficiencies due to increased manufacturing steps.

Other approaches proposed to produce patterns on sheet glass include screen printing, stenciling or painting. However, these printed products fail to withstand external environmental conditions such as heat, ultraviolet light and moisture, and the final product lacks a three-dimensional detail such as varying contours in the glass.

Accordingly, conventional glass forming techniques have not been found suitable for incorporating textured glass products into structures exposed to a wide variety of environmental conditions and loads.

Overcoming these concerns would be desirable and could save the industry substantial resources.

### BRIEF DESCRIPTION OF THE DRAWINGS

While the claims are not limited to a specific illustration, an appreciation of the various aspects is best gained through a discussion of various examples thereof. Although the drawings represent illustrations, the drawings are not necessarily to scale and certain features may be exaggerated to better illustrate and explain an innovative aspect of an example. Further, the exemplary illustrations described herein are not intended to be exhaustive or otherwise limiting or restricted to the precise form and configuration shown in the drawings and disclosed in the following detailed description. Exemplary illustrates are described in detail by referring to the drawings as follows:
FIG. 1 illustrates a top perspective view of a glass tile according to an example;
FIG. 2 illustrates a bottom perspective view of the glass tile of FIG. 1;
FIG. 3 illustrates a bottom perspective view of a glass tile according to another example;
FIG. 4 illustrates a cross-sectional view of the glass tile of FIG. 1 taken along lines IV-IV;
FIG. 5 illustrates a cross-sectional view of a portion of the glass tile of FIG. 1 taken along lines V-V to show a first example of a predefined texture disposed on a first face thereof;
FIG. 6 illustrates a cross-sectional view of a portion of the glass of FIG. 1 tile taken along lines VI-VI to show a second example of a predefined texture on a first face and a second face thereof;
FIG. 7 illustrates a cross-sectional view of a portion of the glass tile of FIG. 1 taken along lines VII-VII and oriented to the side to show a third example of a predefined texture on a peripheral side thereof;
FIG. 8 illustrates a bottom view of a glass tile showing surface textures according to an example;
FIG. 9 illustrates a top perspective view of a decorative assembly according to an example;
FIG. 10 illustrates a cross-sectional view of the decorative assembly taken along lines X-X of FIG. 9;
FIG. 11 illustrates a top perspective view of a glass tile according to another example; and
FIG. 12 is a flow chart illustrating an exemplary method of making a glass tile.

### DETAILED DESCRIPTION

In the drawings, where like numerals and characters indicate like or corresponding parts throughout the several views, exemplary illustrates are shown in detail. The various features of the exemplary approaches illustrated and described with reference to any one of the figures may be combined with features illustrated in one or more other figures, as it will be understood that alternative illustrations that may not be explicitly illustrated or described may be able to be produced. The combinations of features illustrated provide representative approaches for typical applications. However, various combinations and modifications of the features consistent with the teachings of the present disclosure may be desired for particular applications or implementations.

The representative illustrations described below relate generally to a glass tile and a method of making a glass tile having a hollow body and surface texture so as to simulate an organic appearance of full thickness on a marginal portion with a hollow (e.g., recessed) center portion. The glass tile is shaped with a maximum volume of glass being provided near the edge or sides during forming to define an annular rim surrounding a hollowed-out cavity such that the glass tile appears solid when viewed from the side. In general, a multi-sided compartment may be formed that includes a base with one or more elements extending away from the base. In the exemplary illustrations below, the glass tile resembles the structure of a five-sided compartment and, according to one approach, a five-sided box. The glass tile may be incorporated into a decorative assembly or structure including, but not limited to, a glass tile for floors, doors, windows, roofs, lights, landscapes, and architectural designs. Artisans may recognize similar applications or implementations with other technologies and configurations.

The glass tile is made by a glass pressing method where a glass gob (e.g., a fixed amount of molten glass) is shaped in a press machine, for example a press machine and operation thereof described in U.S. Pat. Nos. 6,701,748 and 5,851,257, the contents of which are hereby incorporated by reference in their entirety. Unlike conventional pressing techniques, which tend to produce comparatively thick-walled products due to difficulties with the filling shape of molten glass in the mold due to the dynamic geometry changes of the molten glass that alters the heat transfer process, the glass pressing method according to the disclosure can make a glass tile with a wall thickness in the hollow center portion of about 2.8-3.2mm with a high reproduction rate. Further, the disclosed glass pressing method permits the glass tile to be made with a textured surface and one or more thickened regions, e.g., an annular rim, a rib(s), and/or a positioning element(s), in a single pressing step. In making the glass tile, a molten glass gob having a predetermined temperature between the transition point (T_{g}) and softening point (SP) is positioned in a mold cavity, where the glass gob is pressed and shaped into a hollow, textured glass tile in the form of a multi-sided compartment generally having four sides and a base.

The glass gob may be preformed into a predetermined shape prior to being positioned in the mold cavity to achieve better glass distribution in the mold cavity and accelerate formation of the glass gob into its final shape. For example, molten glass may be preformed into a glass gob having a generally cylindrical shape (e.g., a generally circular cross-section) appreciating that the glob is in the form of a viscous liquid, such as by way of passing the molten glass through an annular loading funnel having a cylindrical portion with an internal diameter, e.g., a circular cross-section, that deforms the molten glass into a cylindrical shape and orients and/or aligns the glass gob with respect to the mold cavity. Alternatively, the glass gob may be preformed into a generally non-circular shape in cross-section such as a substantially quadrilateral shape, e.g., a rectangular cross-section again appreciating that the gob is in the form of a viscous liquid, before being positioned in the mold cavity to further facilitate mold filing and/or shaping the glass gob into the glass tile. Pursuant to an implementation, the glass gob may be preformed into a non-circular cross-sectional geometry (e.g., a generally rectangular cross-section) by extruding molten glass through an orifice of a gob feeder having a predetermined cross-section (e.g., an orifice with a rectangular cross-section) and shearing (e.g., cutting) a predetermined amount of the molten glass to provide a preformed glass gob with a generally rectangular cross-section. Pursuant to another implementation, the glass gob may be preformed into a non-circular cross-sectional geometry (e.g., a rectangular cross-section) by delivering a predetermined amount of molten glass to a preformer with a predefined internal cross-section (e.g., rectangular), a predefined area, and a predefined thickness. The molten glass may be delivered to the preformer via a loading funnel having a non-circular (e.g., rectangular) internal cross-section that deforms and/or shapes the molten glass into a non-circular glass gob and orients the shape of the glass gob with respect to the internal cross-section of the preformer. The preformer may include, for example, a coffin-shaped guide structure or a coffin-shaped jacket having a non-circular (e.g., rectangular) internal cross-section with a predefined area and a predefined thickness that shapes the molten glass arranged therein into a preformed glass gob with a rectangular cross-section. If the loading funnel is employed, the internal cross-section thereof may be less (i.e., smaller) than the predefined internal cross-section of the preformer to facilitate accurately positioning the glass gob in the preformer. Additionally or alternatively, the preformed glass gob may further undergo a rolling process while arranged in the preformer (e.g., a roller works on the glass while in the preformer) to further flatten and shape the preformed glass gob into a desired geometry such as thickness and cross-section.

Once positioned in the mold cavity, the glass gob is compressed by a plunger or pressing plunger (hereafter "plunger") pressing the glass gob in the mold cavity. The plunger is configured and sized for insertion into the mold cavity, and may be employed to form the front face or the opposite hollowed-out face of the glass tile. During compression, the glass gob is squeezed and spreads out in a space or gap between the pressing surface of the mold cavity and the plunger, wherein the plunger displaces a volume of glass outwards in the gap to shape the glass gob with a hollow center portion and a relatively thicker marginal portion. By preforming the glass gob into a non-circular (e.g., a rectangular) shape, the glass gob is positioned in the mold cavity with a shape closer to that of the final product and initially occupies a greater amount of area of the mold cavity and thus reduces the distance the glass gob travels or spreads out to fill the mold as compared to a glass gob of a generally circular cross-section, thereby facilitating improvements with respect to consistency, repeatability, and temperature distribution. The plunger is maintained in the mold cavity for a predetermined time at a predetermined pressure until the glass gob fills the mold and deforms around the plunger to form a hollow body where a maximum volume of glass is disposed in the marginal portion to provide an organic appearance of full thickness when viewed from the side of the glass tile. The viscous flow of the glass gob is strongly dependent on temperature distribution and the contact with the forming tools, where even slight changes in pressure, hold time and temperature may have a significant influence on the filling shape of the glass gob in the mold cavity and the final product thickness and transparency of the glass tile. Accordingly, the predetermined temperature should be maintained in a range of about 1096°C to 1177°C to provide a glass viscosity of about Log 2 to Log 4 when the glass gob is positioned in the mold cavity.

The glass pressing method disclosed herein not only produces a complex (e.g., hollow) geometry, but additionally forms surface texture and/or decorative patterns without subsequent machining or post forming. In this regard, the mold cavity and/or the outer profile of the plunger has a pressing surface contoured to imprint texture and/or decorative patterns in the surface of the glass tile while under compression and, therefore, the shape of the final product may be produced in a single compression step. Alternatively, it may be possible under certain circumstances to do the processing utilizing a series of compression steps taking place in rapid succession one after the other while the glass is maintained at a generally constant temperature between steps. A single compression step formation of a final shape of a glass article is illustrated by way of example herein. Pursuant to an implementation, the mold may include a valve defining a central or middle portion of the mold cavity that may be used to shape at least a portion of the hollowed-out cavity of the glass tile and lift or eject the glass tile from the mold cavity following compression. The valve may advantageously enable increased flexibility to change the optics and/or surface profile of the glass tile in a simple and repeatable manner. For example, the valve may be made from a different material and/or have a different surface geometry than that of the mold to permit forming different surface textures, shaped elements, and/or decorative patterns on the glass tile. Additionally or alternatively, the valve may be heated to a different temperature than the mold cavity to influence glass transparency, for example to provide a chilled or frosted appearance, to provide a translucent area, to improve the clarity (transparency) in the area of the valve, etc. The provision of a valve may also facilitate process improvements since valves having differently contoured pressing surfaces may be interchanged with one another and used with a common mold blank.

After the final shape has been formed, the glass tile may be subjected to a tempering treatment to facilitate improvements in properties such as strength and thermal resistance. Pursuant to one implementation, the tempering treatment may provide a two-layered structure (e.g., two layers of compression). In contrast to a five-layered fully tempered glass, which cannot be cut and may produce optical distortions, the two-layered tempered glass tile is cuttable without any optical distortions and, owing to the rim and the shape of the glass tile, meets the applicable safety and regulatory standards such as the Class 4 FM 4473 rating (hail impact test) and Class F D3161 rating (wind-resistance test).

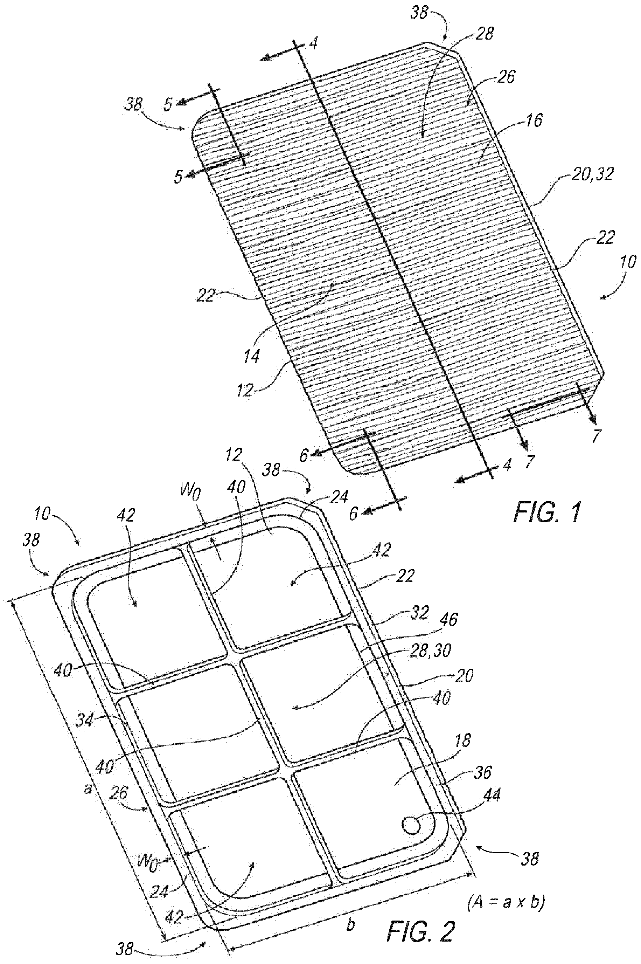

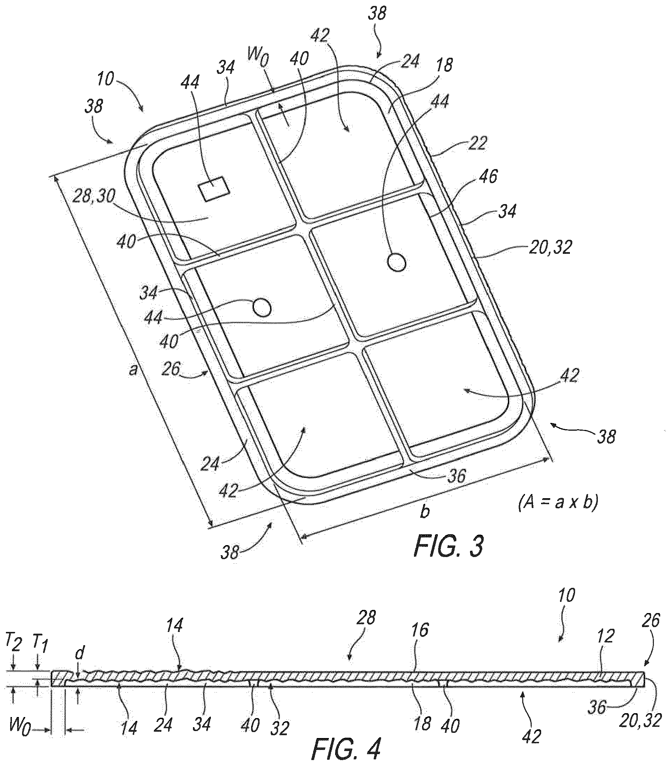

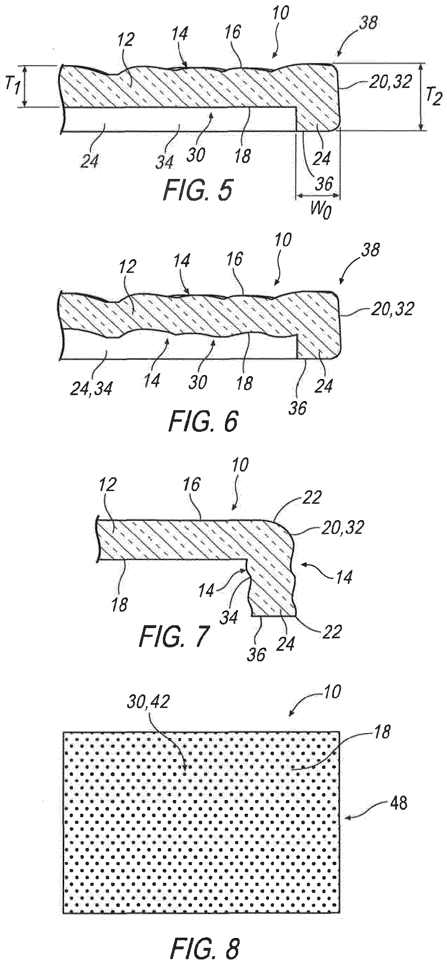

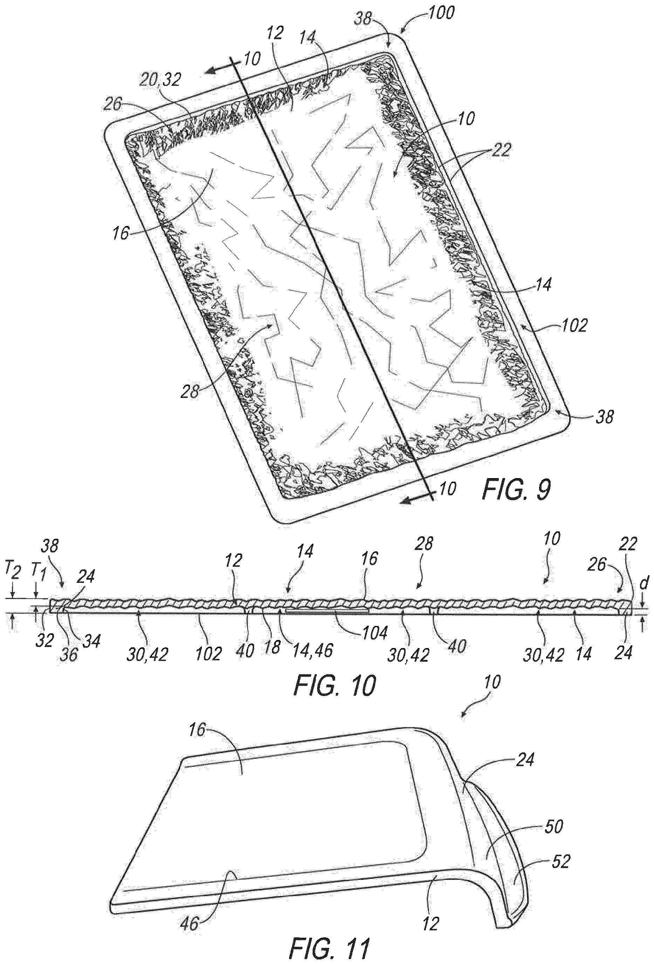

Referring now to FIGS. 1-7, there is shown an exemplary glass tile generally at 10. Although the glass tile 10 is shown having a generally rectangular shape, it will be appreciated that the glass tile 10 may take the form of other shapes without departing from the scope of the disclosure. The glass tile 10 may be monolithic (e.g., a single uniform glass tile) and has a tile body 12 of substantially homogeneous glass material, such as soda-lime-silica glass, although it will be appreciated that other glass compositions are contemplated herein. The glass tile 10 has a tile body 12 with a predefined texture 14 to provide a desired visual effect and/or a desired optical effect. The predefined texture 14 may be disposed on a first face or top face 16 (hereinafter "first face 16") having a first surface and/or a second face or bottom face 18 (hereinafter "second face 18") having a second surface, and form an undulating surface of elevations and depressions for an organic appearance, which is more clearly shown in FIGS. 4-7. To facilitate tempering of the glass tile 10, the predefined texture 14 can be provided on both the first face 16 and the second face 18 in a mutual relationship to define a substantially uniform thickness notwithstanding the undulating profile, as shown in FIG. 6 (see also FIG. 10). Further, the predefined texture 14 may be provided only in sections or regions of the glass tile 10 on the first face 16 and the second face 18, as shown in FIG. 4, and maintain a generally uniform thickness in the region(s) with the predefined texture 14 as well as regions with a substantially planar first face 16 and second face 18. The predefined texture 14 may be provided to cover substantially all of the first face 16 and/or the second face 18, and/or the predefined texture 14 may include a plurality of geometric shapes, patterns or the like. Additionally or alternatively, the press molding technique described herein allows for the predefined texture 14 to be formed on a peripheral side 20 of the glass tile 10 without secondary processing and provide an irregular edge 22 at the top or front edge of the rim 24 and/or at the bottom or rear edge of the rim 24, as shown in FIG. 7. The provision of an irregular edge 22 enhances the surface detail to simulate a more natural product. The ornamentation and geometry of the predefined texture 14 is exemplary only, and not limiting to the number of possible ornamental designs and shapes which may be formed on the glass tile disclosed herein.

The glass tile 10 includes an annular rim 24 protruding transversely from the tile body 12 in a marginal portion 26 and a recessed or hollow center portion 28 defining a cavity 30, where the marginal portion 26 covers an extent displaced inwards from the peripheral side 20 corresponding to a predetermined width Wₒ of the rim 24. The provision of the rim 24 surrounding the hollow center portion 28 along the marginal portion 26 provides the appearance of solid glass as well as improves the strength and load-bearing performance of the glass tile 10. The rim 24 has an outer surface 32, an inner surface 34 and a mounting surface 36, wherein the predetermined width Wₒ is defined between the outer surface 32 and the inner surface 34. In the illustrated example, the outer surface 32 of the rim 24 merges with or otherwise defines the peripheral side 20 of the tile body 12. The peripheral side 20 may define corners 38 that are rounded and/or chamfered. The inner surface 34 shown in the illustrated example, by contrast, is rounded at the corners 38. Rounded corners may increase the structural integrity of the glass tile 10 as compared to sharp corners by reducing stresses and hence the undesired propagation of cracks or other glass failure (e.g., shattering when fully tempered). Further, the rim 24 may merge into the tile body 12 via a rounded transition and/or an angled transition (e.g., right angle) at the inner surface 34 and/or the outer surface 32, wherein a rounded transition likewise reduces stresses in the glass tile 10.

As shown in FIGS. 2 - 4, the rim 24 is structured to extend continuously around the cavity 30 along the peripheral side 20 to facilitate substantially equal strength improvements, although discontinuous structures are also contemplated herein. Further, the predetermined width Wₒ of the rim 24 is illustrated as essentially constant in a circumferential direction (e.g., subject to manufacturing tolerances) at least between the corners 38, as shown in FIG. 2, and can even be formed essentially constant over the corners 38, as shown in FIG. 3, to facilitate a generally uniform thermal distribution during the forming process to minimize undesirable stress and possible failure of the glass article 10 when it is being used in its intended operational environment. According to another example, the predetermined width Wₒ may gradually increase in a thickness direction from the mounting surface 36 to the tile body 12 such that the rim 24 has a greater width at the transition into the tile body 12 than at the mounting surface 36 to facilitate improvements in strength and load-bearing performance.

The cavity 30 of the hollow center portion 28 facilitates a reduction in the overall weight and mass of the glass tile 10 as well as the amount of molten glass required to make the glass tile 10. According to an aspect of the disclosure, the tile body 12 may optionally accommodate one or more ribs or partitions (hereinafter "rib(s) 40") in the cavity 30. The rib(s) 40 may serve to strength the glass tile 10, partition the cavity into discrete pockets 42, and/or form a decorative pattern. Further, load-bearing performance and impact resistance, such as forces attributable to weather conditions (e.g., high winds, hail, etc.) and/or human or animal conditions (e.g., withstanding the weight of a person walking on the tile), may be further enhanced by the provision of a plurality of ribs 40 arranged transversely in the cavity 30 and connected to the rim 24 on opposite sides of the glass tile 10, as shown in the non-limiting examples of FIGS. 2-4. The rib(s) 40 may be formed with a width and length corresponding to that of the rim 24. Additionally or alternatively, one or more positioning elements 44 may be provided to position the glass tile 10 on a support structure 102 (see FIGS. 9-10). The positioning element(s) 44 may project outwardly from the cavity 30, e.g., a cylindrical, conical and/or frustroconical structure, and/or may comprise a recess or groove structured and arranged to receive a counter-positioning element of the support structure.

The cavity 30, or at least a portion thereof, may be formed during the pressing operation by a contour of a valve that is part of or works together with the mold to define the mold cavity, which may produce a valve mark line of distinction (hereafter "valve mark line 46") such as an indent line as shown FIGS. 2 and 3. The valve mark line 46 may define an indent line extending around a periphery of the cavity 30 (e.g., inwards of the annular rim 24) and provide a slightly indented surface in the hollow center portion 28 within an extent or area of the valve mark line 46. The use of a valve in combination with a mold may facilitate forming the tile body 12 with two or more different textures, two or more different shapes, and/or two or more different transparencies. The valve may have a pressing surface that is different from that of the mold to provide the mold cavity with separate contours that form different surface textures and/or shapes. For example, the valve may have a pressing surface for shaping the hollow center portion 28 that provides one or more ribs 40 and/or pockets 42 and/or positioning elements 44 while the mold may have a pressing surface that forms the annular rim 24, and thereby simplify the forming process and reduce manufacturing expenditures since different valves may be interchanged while using a common mold. As another example, additionally or alternatively, the valve may have a pressing surface that forms the predefined texture 14 in one or more pockets 42 while the mold may have a pressing surface that is substantially planar. Further, the valve may additionally or alternatively be heated to a temperature different from a temperature of the mold to, e.g., to provide an opaque or translucent masking that obstructs the transmission of light through at least part of the hollow center portion 28.

As best illustrated in FIG. 8, the cavity 30 may accommodate a second predefined geometry, such as an optical component in the form of microstructures 48 formed in the second face 18 having geometries configured to alter the state of light for a variety of purposes including, but not limited to, diffusing, dispersing, focusing and filtering light in ultraviolet, visible or infrared wavelength ranges. For example, the distribution and/or geometries of the microstructures 48 may be configured to concentrate light passing into the cavity 30, diffuse light into the cavity 30, or minimize glare when viewing the glass tile 10. The microstructures 48 may be characterized by a smaller size and/or a less discernable pattern as compared to the predefined texture 14. The microstructures 48 may be shaped as protuberances, depressions, grooves, corrugations or like structures, and may have edges or non-parallel flat surfaces (e.g., facets). Further, different optically functional microstructures 48 may be incorporated into the second face 18 of the tile body 12 and be separated by the ribs 40. For example, microstructures 48 that diffuse light may be accommodated in one pocket 42 while microstructures 48 that concentrate light may be accommodated in another pocket 42, thereby integrating different applications with the same glass tile 10. The microstructures 48 may be formed during the pressing operation by the contour of the mold cavity (e.g., the mold and/or the valve). Alternatively, in some circumstances the microstructures 48 may be formed by the contour of the pressing surface of the plunger. The microstructures 48 may optionally be further machined in a secondary operation such as electrical discharge machining (EDM) and laser engraving once the overall shape of the glass tile 10 is completed.

Referring to FIGS. 2-4, the glass tile 10 has a first thickness T₁ in the center portion 28 that is different from a second thickness T₂ in the marginal portion 26. The first thickness T₁ and the second thickness T₂ may be generally constant throughout the center portion 28 and the marginal portion 26, respectively, to facilitate a homogenous thermal distribution throughout the glass tile 10 during forming. For example, if the first face 16 is provided with a predefined texture 14 of elevations and depressions, then the second face 18 is provided with a complementary predefined texture 14 of corresponding elevations and depressions arranged mirrored in mutual relation to the predefined texture 14 of the first face 16 to offset the change in surface topography of the first face 16, as shown in FIGS. 6 and 10. Thus, the first thickness T₁ remains generally constant subject to tolerances (e.g., less than approximately ±20%, and may fall within a range of ± 10-15%, of the average thickness) throughout the center portion 28 even when the first face 16 and the second face 18 define an undulating profile by compensating for depressions in the first face 16 with corresponding elevations in the second face 18, and vice versa. Additionally or alternatively, the rim 24 may include a predefined texture 14 on the outer surface 32 that is mirrored in mutual relationship to a predefined texture 14 on the inner surface 34 to provide a generally constant width Wₒ in the thickness direction (e.g., in a direction of the mounting surface 36 towards the first face 16) notwithstanding an undulating profile defined on the outer and inner surface 32 and 34 of the rim 24, as shown in FIG. 7.

According to another implementation, the glass tile 10 may have a variable thickness in the center portion 28 and/or the marginal portion 26. For example, the glass tile 10 may be provided with a predefined texture 14 only on the first face 16 or the second face 18 as shown by way of example in FIG. 5 where the first face 16 is provided with the predefined texture 14, and/or only on the outer surface 32 or the inner surface 34 of the rim 24. In this case, the adjustment in thickness may be gradual to avoid sharp variations of thickness in any one location and minimize high temperature variations during forming. The total variation of the first thickness T₁ and the second thickness T₂ of the glass tile 10 may be less than about ±20%, ±10%, ±5%, or ±3% of the average thickness of the center portion 28 and the marginal portion 26, respectively. The geometric relationships for the glass tile 10 described herein applies to implementations where the first thickness T₁ and the second thickness T₂ are generally constant, and where the first thickness T₁ and the second thickness T₂ are variable.

The glass tile 10 simulates the appearance of full thickness through maximizing the volume of glass at the peripheral side 20 by displacing glass material from the center portion 28 during the forming process. Thus, as compared with conventional structures such as laminates, mass and/or weight savings may be derived from distorting a fixed volume of molten glass to form the first thickness T₁ in the center portion 28 less than the second thickness T₂ in the marginal portion 26 defined by the rim 24. Due to the minimum requirements of thickness for tempering, the first thickness T₁ in the illustrated example is about 3-3.2 mm (± 0.2 mm). Accordingly, the first thickness T₁ of the center portion 28 may amount to about 50% to 65% of the thickness T₂ of the marginal portion 26 to provide a lightweight, low profile for designers to incorporate the glass tile 10 into a support structure. The cavity 30 of the hollow center portion 28 provides key potential advantages. For example, cavity 30 provides a receiving space having a depth d for illuminating elements and/or electric elements (e.g., LED, OLED circuitry, etc.). It also provides a gas filled space (e.g., air) that may facilitate improvements in heat insulating properties. The depth d of the cavity 30 is defined by the distance from the second face 18 to the mounting surface 36 of the rim 24, and the depth d amounts to about 56% to 83% of a thickness T₁ in the center portion of the tile body 12. Additionally or alternatively, the depth d of the cavity 30 may amount to about 36% to 46% of a maximum height H of the glass tile 10, defined by the distance from the first face 16 to the mounting surface 36 of the rim 24. The ribs 40, if provided in the cavity 30, may have an extent corresponding to the depth d of the cavity 30 (e.g., the ribs 40 terminate at a position level with the mounting surface 36 of the rim 24), and/or the ribs 40 have a width corresponding to the predetermined width Wₒ of the rim 24.

The predetermined width Wₒ of the rim 24 is sized to facilitate shaping the glass gob as well as a uniform temperature distribution during forming, while at the same time balancing the influence of providing a maximum volume of glass in the marginal portion 26 and the properties of the glass tile 10 in terms of strength and impact resistance. Accordingly, a ratio of the thickness T₂ of the marginal portion 26 defined by the rim 24 to the predetermined width Wₒ conforms to the relationship T₂/Wₒ of about 0.6 to 1.8. If the relationship T₂/Wₒ is less than 0.6, then the glass tile may suffer from structural defects or imperfections due to non-uniform cooling during production. Further, problems with the filling shape of the molten glass in the mold may arise because the viscoelastic glass tends to flow in the place of lesser resistance, and when the relationship T₂/Wₒ is less than 0.6, the glass in this portion of the mold will be confronted with high resistance. On the other hand, if the relationship T₂/Wₒ is greater than 1.8, the rim 24 may not impart sufficient strength to withstand the impact of hail or other objects and risk failure in a variety of environmental conditions. Therefore, structuring the rim 24 to conform to the relationship T₂/Wₒ of about 0.6 to 1.8 facilitates improvements in strength gains, weight savings, replication rate, and thermal tempering. Pursuant to a refinement, the rim 24 may be further reduced and conform to the relationship T₂/Wₒ of about 1.5 to 1.75, and thereby maximize the area or size of the cavity to provide further weight and mass reductions without sacrificing the structural integrity of the glass tile 10. In this regard, strength increases provided by the rim 24 and the structural integrity of the glass tile 10 can be maintained if the width Wₒ of the rim amounts to about 0.004% to 0.012% of a predefined area A (a x b) covered by the cavity 30. With respect to the thickness T₁ at the center portion 28 and the predetermined width Wₒ of the rim 24, the rim 24 conforms to the relationship T₁/Wₒ of about 0.37 to 1. Merely as one non-limiting example of the dimensional values for the geometric relationships, the glass tile 10 may have a first thickness T₁ of approximately 3.2 mm (± 0.2 mm), a second thickness T₂ of approximately 5 mm (± 0.35 mm), a rim 24 defining a predetermined width Wₒ of approximately 3.18 mm (± 0.38 mm), and a cavity 30 with a first length a of approximately 213.5 mm (± 0.5 mm) and a second length b of approximately 349.75 mm (± 0.5 mm) defining a predefined area A of about 74671.6 mm2. These geometric relationships together result in the synergistic effect of improved structural integrity of the glass tile 10 by increasing the stiffness-to-weight ratio since mass savings are derived from the cavity 30 and the glass tile 10 absorbs loads with its overall shape through the provision of the annular rim 24, and optionally one or more ribs 40, instead of local sectional areas.

FIGS. 9 and 10 illustrate an exemplary decorative assembly 100 pursuant to an implementation. As shown, the decorative assembly 100 may include the glass tile 10 mounted on a support structure 102. The support structure 102 may be selected from a variety of materials and have a variety of shapes depending on the particular application. As contextual examples, the glass tile 10 may be incorporated into various structures used in various applications including, but is not limited to, door and window frames, lighting, furniture, roofing, landscaping and facades, and other architectural structures, both residential and commercial in nature. The glass tile 10 of the illustrated example has a hollow tile body 12 provided by the rim 24 and the cavity 30 with a predefined texture 14 on the first face 16 in a region of the marginal portion 26 that slopes or tapers downwards in a disruptive manner towards the second face 18 to the peripheral side 20, where an irregular edge 22 is formed to simulate a decorative and organic appearance of full thickness. Pursuant to an implementation, a complementary predefined texture 14 with corresponding elevations and depressions in mutually mirrored relation may be provided on the second face 18 to maintain a generally uniform thickness of the glass tile 10, as shown by way of example in FIG. 10. It will be appreciated that a glass tile 10 without a tapering first surface 16, such as the example illustrated in FIG. 1, can be incorporated into the decorative assembly 100 to provide an organic appearance of full thickness owing to the maximum amount of glass being formed near the peripheral side 20 in the region of the rim 24. The decorative assembly 100 may include one or more functional elements 104 housed in the cavity 30 or otherwise covered by the glass tile 10, as shown in FIG. 10. The functional elements 104 may include, but are not limited to, illuminating elements and/or electric elements (e.g., LED, OLED circuitry, etc.).

The glass tile 10 is mounted on the support structure 102 via the rim 24. In this case, the rim 24 additionally functions to mount the glass tile 10 on the support structure 102 via the mounting surface 36. The mounting surface 36 may be configured receive a sealing element, such as an injection molded plastic, in a groove (e.g., a U-shaped channel) formed along the rim 24 to minimize or prevent leakage out of and/or the ingress of moisture into the cavity 30, and/or to seal off the cavity 30. The cavity 30 provides various advantages in addition to facilitating weight and mass reductions owing to the hollow nature of the tile body 12. For example, the cavity 30 defines a receiving space having a depth d for functional elements 104 such as illuminating elements and/or electric elements, and may provide a gas filled space (e.g., air) that may facilitate improvements in heat insulating properties. One or more ribs 40 may be provided in the cavity 30 to form a plurality of pockets 42. The pockets 42 may partition the cavity 30 into discrete sections that may be utilized for different functions and/or receive different functional elements 104. For example, at least one of the pockets 42 may accommodate an illuminating element (e.g., LED or OLED lights) while at least one other of the pockets 42 may accommodate circuitry. As another example, the second face 18 of at least one pocket 42 may include microstructures 48 that have a first optical function, e.g., diffusion, while the second face 18 of another pocket 42 may include microstructures that have a second optical function, e.g., filtering. The rib(s) 40 may include a receiving groove (e.g., a curved or U-shaped channel) for a sealing element to seal off the individual pockets 42 within the cavity 30. Additionally or alternatively, at least one rib 40 may be formed discontinuous or otherwise provide a duct or channel to form a connection between adjacent pockets 42, for example to guide wires between individual pockets 42 and/or to fluidly connect adjacent pockets 42. Additionally or alternatively, one or more positioning elements 44 may interact with the support structure 102 to position and/or secure the glass tile 10 in place. For example, the positioning element(s) 44 may comprise a piece of glass projecting from the second face 18 of the tile body 12 to engage with a counter-positioning element of the support structure 102.

Positioning and thermal regulation may be further facilitated by providing the glass tile 10 with a riser foot 50, as shown in FIG. 11. The riser foot 50 elevates the glass tile 10 to create a space for ventilation, cooling and system designs, and facilitates mounting via a flange-shaped foot 52. The riser foot 50 may extend outwards from the rim 24 and be formed in one piece with the tile body 12. Additionally, the riser foot 50 may provide or include an interlocking mechanism to integrate multiple glass tiles in a common tile array without modifying the geometric relationships of the respective glass tiles. The interlocking mechanism may be an extension of the flange-shaped foot 52 where a second glass tile (not shown) is integrated, for example. FIG. 11 further illustrates an example of a valve mark line 46 provided along the first face 16, in which case the first face 16 may be formed by a mold cavity comprising a valve and a mold while the second face 18 may be formed by the plunger.

The glass tile 10 disclosed herein is a monolithic pressed glass. The pressing process has advantages with respect to shaping molten glass into a hollow body 12 with one or more textured surfaces 14 and, due to the structure of the rim 24, the geometric relationships, and optionally the ribs 40, forms a structurally sound glass tile 10 with a high stiffness-to-weight ratio.

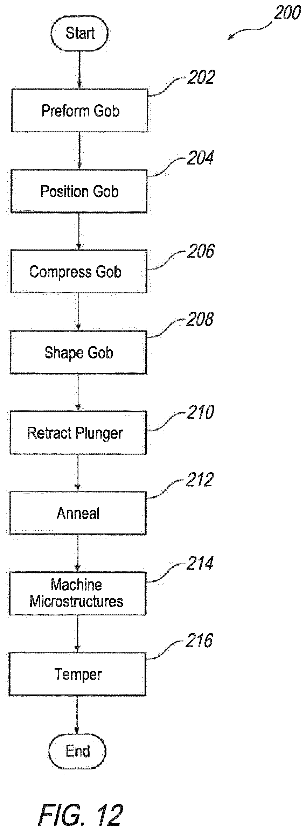

FIG. 12 illustrates an exemplary method 200 of making a glass tile 10. The method may involve shaping a glass gob in a press machine having a mold or first forming tool (including a valveless mold and a mold comprising a valve) and a plunger or a second forming tool. A mixture of raw glass materials may be initially heated in a furnace and carried in a forehearth to a gob feeder, which may deliver the molten glass to the press machine via a chute(s) and/or a preformer mechanism.

At step 202, a molten glass gob may be preformed into a desired geometry to facilitate formation of the glass tile with a predetermined shape before being delivered to the press machine. The glass gob may be preformed at a temperature of approximately 1096°C ± 1°C (2005°F) to 1177°C ± 1°C (2150°F). Pursuant to an implementation, molten glass may be preformed into a glass gob having a cylindrical shape (e.g., a circular cross-section). A preformed glass gob having a generally cylindrical shape may facilitate shaping the glass gob into a glass tile with a rounded outline such as curved or rounded corners merely as one example. To form a generally cylindrical glass gob, the molten glass may be passed through an annular loading funnel having a cylindrical portion with an internal diameter, e.g., a circular cross-section, that deforms the molten glass into a cylindrical shape. Pursuant to another implementation, molten glass may be preformed into a non-circular shape in cross-section such as a substantially quadrilateral shape, e.g., a substantially rectangular cross-section. A preformed glass gob having a non-circular shape may facilitate shaping the glass gob into a rectangular glass tile in a consistent and repeatable manner. To form the rectangular glass gob according to one example, molten glass flowing through a forehearth (e.g., a ribbon sheet of glass) may be passed to a gob feeder of the forehearth and extruded through an orifice of the gob feeder having a non-circular (e.g., rectangular) cross-section and then cut (e.g., sheared) to provide a preformed rectangular glass gob of a fixed mass. The preformed rectangular glass gob may then be positioned in the mold cavity for shaping. To form the rectangular glass gob according to another example, a predetermined amount of molten glass may be delivered to a preformer having a predefined internal cross-section (e.g., rectangular), a predefined area, and a predefined thickness. The preformer may include, for example, a coffin-shaped guide structure or a coffin-shaped jacket that deforms the molten glass into a shape conforming to its internal cross-section. The preformer may be preheated to a temperature equal to or slightly greater than the predefined temperature of the glass gob to prevent or at least minimize a non-uniform temperature distribution. The molten glass may be delivered to the preformer via a loading funnel having a non-circular (e.g., rectangular) internal cross-section that deforms and/or shapes the molten glass into a non-circular glass gob and orients the shape of the glass gob with respect to the internal cross-section of the preformer, wherein the preformer further shapes the glass gob into a desired geometry such as thickness and cross-section. Additionally or alternatively, the preformed glass gob may further undergo a rolling process while arranged in the preformer (e.g., a roller works on the glass while in the preformer) to further flatten and shape the glass gob before the pressing operation. The provision of preforming the glass gob may facilitate achieving better glass distribution in the mold cavity and accelerate formation of the glass gob into its final shape. It will be appreciated, however, that the glass gob may be positioned in the mold cavity without being preformed and still produce a glass tile with satisfactory characteristics such as shape, clarity, and structural integrity. The method then proceeds to step 204.

At step 204, the glass gob having a predefined temperature, e.g., approximately 1096°C ± 1°C (2005°F) to 1177°C ± 1°C (2150°F), providing a predefined glass viscosity, e.g., Log 2 to Log 4 (which translates to a temperature range of approximately 1467°C (about 2671°F) to 1022°C (about 1871°F), is positioned in a mold cavity of a mold, which may be valveless or include a valve as discussed above. The glass gob, if preformed, may be transferred and positioned in the mold cavity without significant heat loss to reduce the extent of premature cooling. The mold cavity may be preheated prior to receiving the glass gob to a temperature equal to or slightly greater than the predefined temperature of the glass gob to prevent or at least minimize a non-uniform temperature distribution. The mold cavity may be shaped and sized to form the first face 16, the peripheral side 20 and the outer surface 32 of the rim 24 of the final glass tile 10, and may have an inner contour structured to form a predefined texture 14 on at least one of the center portion 28 of the first face 16, the marginal portion 26 of the first face 16, and the peripheral side 20. Alternatively, the mold cavity may be shaped and sized to form the second face 16, the rim 24, the peripheral side 20 and the outer surface 32 of the rim 24, the mounting surface 36 of the rim 24, the inner surface 34 of the rim 24, the cavity 30 and, if desired, one or a plurality of ribs 40 arranged in the cavity 30 to form a plurality of pockets 42, one or more positioning elements 44, the riser foot 50, and/or an arrangement of microstructures 48 shaped to influence light passing through the glass tile 10. The method 200 then proceeds to step 206.

At step 206, the glass gob is compressed within a predetermined duration by a plunger pressing the glass gob in the mold cavity. The predetermined duration may depend on factors such as the mold "cavity rate," the glass weight and the associated thermal heat transfer of the glass material. As with the mold cavity, the plunger may be preheated prior to pressing the glass gob to a temperature equal to or slightly greater than the predefined temperature of the glass gob. The plunger may be shaped and sized to form the second face 18, the mounting surface 36 of the rim 24, the inner surface 34 of the rim 24, the cavity 30 and, if desired, one or a plurality of ribs 40 arranged in the cavity 30 to form a plurality of pockets 42. Further, the plunger may have an outer contour structured to form a predefined texture 14 on the center portion 28 of the second face 18, and additionally or alternatively structured to form an arrangement of microstructures 48 shaped to influence light passing through the glass tile 10. Due to the predetermined width Wₒ of the rim 24, the contact surface(s) of the plunger is sized smaller than the contact surface(s) of the mold cavity. Accordingly, the pressing action of the plunger pushes a volume of glass into empty spaces of a gap between the contact surface(s) of the plunger and of the mold cavity. Depending on the application, the plunger may additionally be shaped and sized to form one or more positioning elements 44 and a riser foot 50. Alternatively, the plunger may be shaped and sized to form the first face 16 and may have an outer contour structured to form a predefined texture 14. The plunger may fit within the mold cavity and have a contact surface with an outer cross-section formed complementary to an inner cross-section of the contact surface of the mold cavity. The method 200 then proceeds to step 208.

At step 208, the glass gob is shaped into a hollow body by maintaining the plunger in the mold cavity for a predetermined time at a predetermined pressure until the glass gob fills the mold cavity and deforms around the plunger. The predetermined time may be influenced by the plunger speed of engagement with speed / force ratio for shaping the glass gob into a hollow body, and by the packing time or the duration of time to remove sufficient surface temperature from the glass to form a semi-solid, near net shape hollow body that can be transferred to the next stage such as cooling. The predetermined pressure may be determined by the shape / glass weight ratio. The force of the predetermined pressure and the duration of the predetermined time ensure that the glass gob completely fills the mold cavity and deforms around the plunger with a high reproduction rate. During shaping, a further volume of glass is forced into unoccupied portions of the gap to provide a maximum volume of glass in the marginal portion 26 of the glass tile 10. Further, the glass gob conforms to the contact surface(s) of the plunger and the mold cavity to form a near net (e.g., substantially final) shape glass tile 10 with a predefined texture 14 on the first face 16 and/or the second face 18 (e.g., mirrored predefined textures 14 on the first face 16 and the second face 18 to maintain a uniform thickness), and additionally or alternatively a texture in the form of microstructures 48 on the second face 18. As such, the hollow tile body 12 having an annular rim 24 surrounding a cavity 30 with one or more of the above-mentioned geometric relationships is shaped in a precise and highly reproducible manner. According to one example, the predetermined pressure and the predetermined time may facilitate forming a generally constant thickness throughout the first thickness T₁ of the center portion 28 and the second thickness T₂ of the marginal portion 26. According to another example, the predetermined time and the predetermined pressure may facilitate forming a thickness gradient in an outward direction. That is, the final glass tile 10 is thinnest in the center of the cavity 30 and gradually gains thickness in an outward direction approaching the peripheral side 20, which may facilitate improvements in strength and load-bearing performance due to the curved shape of the center portion 28 of the glass tile 10.

According to an implementation, the shaping step 208 may be performed simultaneously with the compressing step 206. Additionally or alternatively, the compressing step 206 and the shaping step 208 may produce a near net (final) shape glass tile 10 in a single pressing action, thereby avoiding costly post-forming and/or secondary machining. Alternatively, it may be possible under certain circumstances to repeat the compressing step 206 and the shaping step 208 one or more times in rapid succession while the glass is maintained at a generally constant temperature between successive steps. Once the predetermined time has been reached, the method 200 then proceeds to step 210.

At step 210, the plunger is retracted from the mold cavity once the predetermined time has been reached and the final shape of the glass tile 10 is formed. The valve of the mold, if employed, may push or lift the glass tile 10 out of the mold to facilitate transferring the glass tile 10 to the next step. The lifting motion of the valve may impart an indent bordered by a valve mark line 46. The near net (final) shape glass tile 10 cools, and the method 200 then proceeds to step 212.

At step 212, the glass tile 10 is transferred to a lehr and annealed at an annealing temperature for a predetermined annealing duration to relieve stresses and internal strains within the glass tile 10. During annealing, the glass tile 10 is heated to a temperature range encompassing the annealing point, and then heat-soaked until the glass tile 10 has an even internal temperature. The method 200 may then proceed to step 214 if microstructures 48 are formed on the second face 18 in the cavity 30 and further processing is desired. Otherwise, the method 200 proceeds to step 216.

At step 214, the microstructures 48 formed by the plunger or the mold cavity may be further processed by electrical discharge machining (EDM) and/or laser engraving to form geometries and/or surfaces having specific optical functions, such as light filtering, light diffusion, light scattering, light concentrating, and light distortion once the near net shape of the glass tile 10 is formed.

At step 216, the glass tile 10 may be tempered by heating the glass tile 10 to a tempering temperature for a predetermined tempering duration, and then the glass tile 10 is cooled at a predefined rate to form a two-layered tempered glass. During tempering, the glass tile 10 travels through a tempering oven, and the oven heats the glass to a temperature of more than 600°C (e.g., 620°C). The glass then undergoes a cooling procedure, such as high-pressure quenching, where high-pressure coolant (e.g., air) blasts the surface of the glass from an array of nozzles in varying position. Quenching may last a few seconds, and cools the outer surfaces of the glass tile 10 much more quickly than the center. As a result, two outer layers of compression are formed, while the center remains in tension. In contrast to a five-layered fully tempered glass, which cannot be cut and may produce optical distortions, the two-layered tempered glass tile 10 is cuttable without any optical distortions and, owing to the rim 24 and the geometric relationships of the glass tile 10, meets the applicable safety and regulatory standards such as the Class 4 FM 4473 rating (hail impact test) and Class F D3161 rating (wind-resistance test). By way of the two-layered tempered structure, the glass tile 10 may be cut into irregular shapes to account for design constraints, which may facilitate mass production efficiencies since the same glass tile 10 can be produced and then cut to size as desired. Then the method 200 ends.

As used herein, spatial or directional terms such as "inner," outer," "top," "bottom," "upper," "lower," "up," "down," and the like, relate to the illustrations shown in the figures and are not to be considered as limiting. Further, all numbers expressing dimensions, ratios and the like, used in the specification and claims, are to be understood to encompass tolerances and other deviations as represented by the term "about" or "approximately." Moreover, all ranges disclosed herein are to be understood to encompass any and all sub-ranges subsumed therein. Further, descriptive terms qualified by "substantially" and the like are understood to encompass deviations and tolerances. For example, the meaning of the terms "substantially rectangular cross-section" may encompass an oblong equiangular quadrilateral having four right angles, having rounded corners, or having chamfered corners without departing from the scope of the disclosure.

Although the glass tile has been described within the context of a component incorporated into structures, artisans will appreciate that the glass tile may be utilized as a standalone product such as a vessel for food and drinks, serve ware, and a tray for displaying foods or decorations.

It will be appreciated that the aforementioned methods, processes and/or glass tile may be modified to have some components and steps removed, or may have additional components and steps added, all of which are deemed to be within the spirit of the present disclosure. For example, it is contemplated that the rim may be offset from the peripheral side, and that the mounting surface of the rim may have a curvature and/or sloping surface. Additionally, in certain circumstances the plunger may form features associated with the first face 16 of the glass tile 10 and the mold cavity may form features associated with the second face 18 of the glass tile. Accordingly, even though the present disclosure has been described in detail with reference to specific examples, it will be appreciated that the various modifications and changes can be made to these examples without departing from the scope of the present disclosure as set forth in the claims. It is anticipated and intended that future developments will occur in the technologies discussed herein, and that the disclosed method, device and/or article will be incorporated into such future developments. Thus, the specification and the drawings are to be regarded as an illustrative thought instead of merely restrictive thought.

All terms used in the claims are intended to be given their broadest reasonable constructions and their ordinary meanings as understood by those knowledgeable in the technologies described herein unless an explicit indication to the contrary in made herein. In particular, use of the singular articles such as "a," "the," "said," etc. should be read to recite one or more of the indicated elements unless a claim recites an explicit limitation to the contrary. Further, the use of "at least one of' is intended to be inclusive, analogous to the term and/or. Additionally, use of adjectives such as first, second, etc. should be read to be interchangeable unless a claim recites an explicit limitation to the contrary.

## Claims

**1.** A hollow glass tile (10), comprising:
a tile body (12) of a substantially homogenous glass material having a first face (16) with a first surface, an opposite second face (18) with a second surface, and a peripheral side (20);
an annular rim (24) protruding transversely from the second face and extending in a marginal portion (26) of the tile body along the peripheral side, the rim (24) having a predetermined width (Wₒ);
a cavity (30) provided in a central portion (28) of the tile body on the second face and surrounded by the rim, the cavity defined by the second surface and an inner surface (34) of the rim;
a predefined texture (14) provided on at least one of the first face and the second face, the predefined texture defining elevations and depressions in a respective one of the first surface and the second surface of the at least one of the first face and the second face;
wherein a ratio of a thickness of the tile body (12) at the marginal portion (26) to the predetermined width of the rim (24) is about 0.6 to 1.8.

**2.** The glass tile (10) of claim 1, wherein the predetermined width of the rim (24) amounts to about 0.004% to 0.012% of a predefined area of the cavity (30).

**3.** The glass tile (10) of claim 1 or 2, wherein a quotient of a thickness of the tile body (12) in the central portion (28) and the predetermined width of the rim (24) amounts to about 0.37 to 1.

**3.** The glass tile of any one of claims 1 to 3, wherein the thickness of the tile body (12) at the central portion (28) ranges from 50% to 65% of a thickness of the tile body (12) at the marginal portion (26).

**4.** The glass tile (10) of any one of claims 1 to 4, wherein the thickness of the tile body (12) at the central portion (28) is about 3 mm (+/- 0.2).

**5.** The glass tile (10) of any one of the preceding claims, further comprising at least one rib (40) disposed on the second face (16) and extending transversely in the cavity (30) along the second surface, the at least one rib (40) partitioning the cavity into at least two pockets (42).

**6.** The glass tile (10) of any one of the preceding claims, further comprising a second predefined texture provided on the second face, the second predefined texture including an array of microstructures (48) shaped to influence light passing through the tile body (12).

**7.** The glass tile (10) of any one of the preceding claims, wherein the thickness of the tile body (12) in the central portion (28) increases from a center towards the peripheral edge (20).

**8.** The glass tile (10) of any one of the preceding claims, wherein the predefined texture (14) is disposed in the marginal portion (26) of the first face, and wherein the first surface tapers outwardly in the marginal portion (26) to the peripheral edge (20).

**9.** The glass tile (10) of any one of the preceding claims, wherein the glass material is two-layered tempered glass.

**10.** The glass tile (10) of any one of the preceding claims, wherein the cavity (30) has a valve mark line (46) extending around the center portion (28) inwards from the rim (24).

**11.** A decorative glass assembly (100), comprising:
a support structure (102); and
a hollow glass tile (10) according to any one of the preceding claims;
wherein said glass tile (10) is mounted on said support structure (102).

**12.** A method (200) of making a glass tile (10), comprising:
positioning (204) a molten glass gob having a predefined temperature in a mold cavity;
compressing (206) the glass gob by pressing the glass gob via a plunger in the mold cavity;
shaping (208) the glass gob into a hollow body (12) by maintaining the plunger in the mold cavity for a predetermined time at a predetermined pressure until the glass gob fills the mold cavity; and
retracting (210) the plunger from the mold cavity;
wherein shaping the glass gob into the hollow body (12) forms an annular rim (24) with a predetermined width in a marginal portion (26) and a cavity (30) with a predetermined area surrounded by the annular rim (24), and wherein the predetermined width amounts to about 0.004% to 0.012% of the predetermined area.

**13.** The method of claim 12, wherein shaping (208) the glass gob into the hollow body (12) includes imprinting a predefined texture (14) into a surface on an outer face (16) contacting the plunger and/or a surface on a peripheral edge (20) contacting the mold cavity.

**14.** The method of claim 12 or 13, wherein compressing (206) the glass gob and shaping (208) the glass gob are performed simultaneously and form a near net shape hollow body having the annular rim (24) and the cavity (30).

**15.** The method of any one of claims 12 to 14, further comprising preforming (202) the glass gob into a substantially rectangular shape in cross-section before positioning (204) the glass gob in the mold cavity.
